Europäisches Patentamt

European Patent Office

Office européen des brevets

(11) Publication number: **0 432 466 A1**

## (12) EUROPEAN PATENT APPLICATION

(21) Application number: 90121537.6

(22) Date of filing: 10.11.90

(51) Int. Cl.⁵ **F16C 35/073**

(30) Priority: **15.12.89 IT 6809489**

(43) Date of publication of application:
**19.06.91 Bulletin 91/25**

(84) Designated Contracting States:
**DE FR GB SE**

(71) Applicant: **RIV-SKF OFFICINE DI VILLAR PEROSA S.p.A**
**Via Mazzini 53**
**I-10123 Torino(IT)**

(72) Inventor: **Giromella, Giovanni**
**Via Fiorillo, 3**
**I-54036 Marina di Carrara (MS)(IT)**

(74) Representative: **Lotti, Giorgio**
**c/o Ing. Barzanò & Zanardo Milano S.p.A. Via Cernaia 20**
**I-10122 Torino(IT)**

(54) **Selflocking unit for ball bearing.**

(57) A selflocking unit for ball bearings consists of a bushing (10), interposed between the shaft and the inner race (21) of the bearing and equipped with thread (12) along the end sections of its outer surface. The bushing (10) is equipped with flanges (13) threaded internally (14) so as to be screwed on the threads (12) of the bushing (10) and between them the inner race (21) of the bearing is contained.

Fig.1

## SELFLOCKING UNIT FOR BALL BEARINGS.

The object of this invention is a selflocking unit for ball bearings.

Problems often arise when assembling the bearing on the shaft, and in particular some eccentricity may take place between the inner race of the ball bearing and the shaft. This is obviously unacceptable when a correct and long lasting operation of the bearing is desired. Said problem is usually solved by carrying out particular and very expensive processings on the reciprocal contact surfaces of the bearing and the shaft, but this is not always convenient from the production point of view.

It is a purpose of this invention to propose a device which allows the selflocking of the bearing on the shaft without any need of further particular workings on the inner race of the bearing nor on the shaft, but by making use of parts that are simply built and easy to work with and that allow to gain this purpose and other ones that will be better understood further on in the following description.

So this invention proposes to realize a selflocking unit for ball bearings, characterized in that it comprises a bushing, interposed between the shaft and the inner race of the bearing and equipped with a thread along the sections of its outer surface, and equipped with flanges threaded internally so as to be screwed on the threads of the bushing and containing the inner race of the bearing with a taper fit.

The unit according to this invention is now going to be described referring to the enclosed drawings, in which:

fig. 1
is an axial cross section of the mounted unit and of the relative bearing;

fig. 2
is a cross section of the unit mounted without the bearing;

figs. 3, 4, and 5
are axial cross sections of three elements that are parts of the unit;

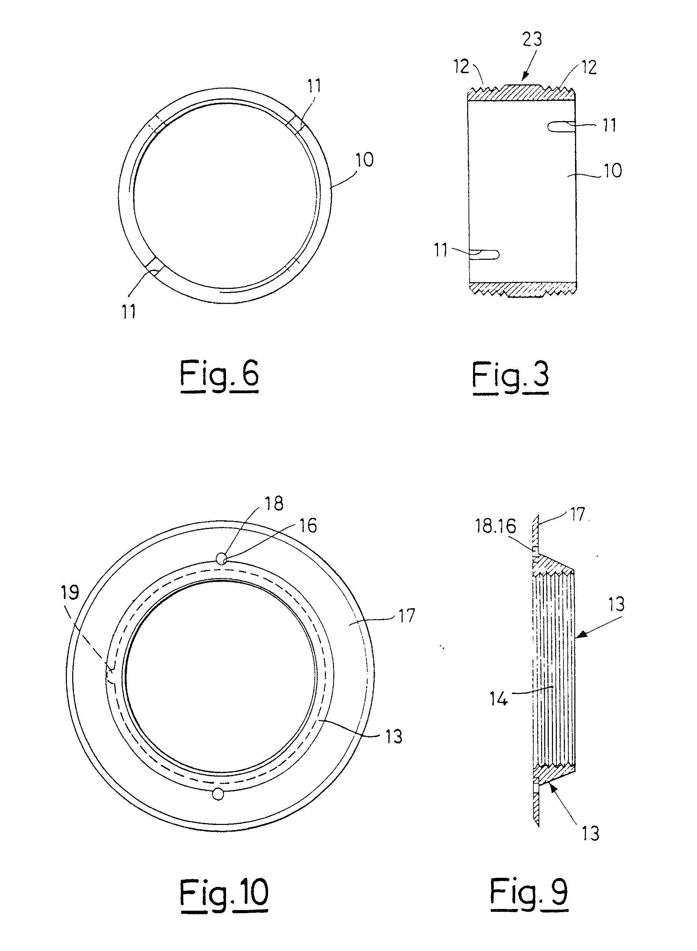

figs. 6, 7 and 8
are front views respectively of the elements of figs. 3, 4 and 5;

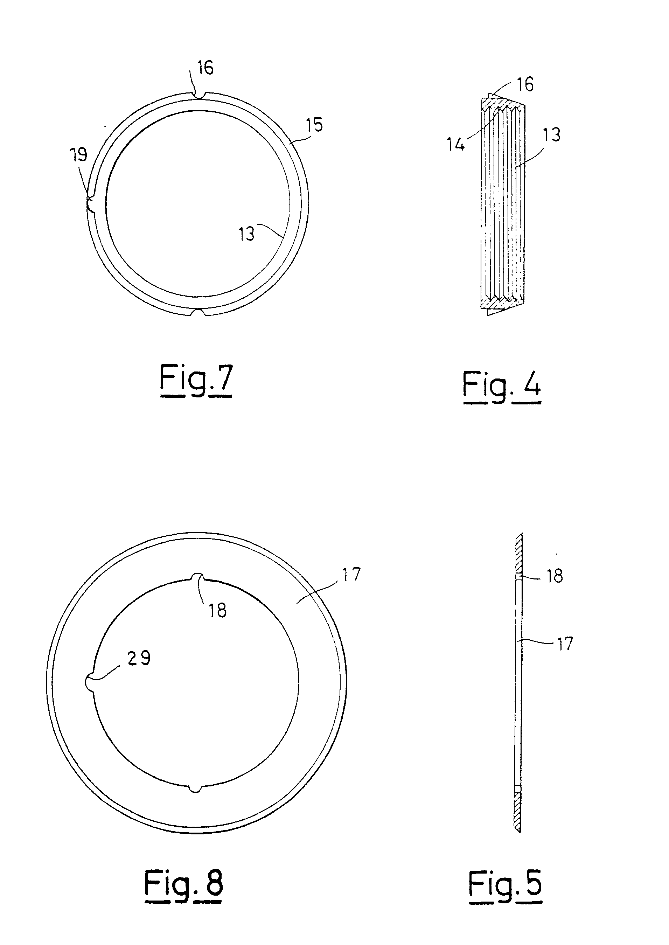

fig. 9
is a cross section showing the elements of figs. 4 and 5 assembled together; and

fig. 10
is a front view of the unit of fig. 9.

The unit according to this invention shows a cylindrical body or bushing (10) (figs. 3 and 6) which is provided with lengthwise slots (11) diametrally opposed and with taper fits (12) obtained in correspondance with its ends. A second element consists of a flange (13) (figs. 4 and 7) which is provided with an internal thread (14) and with a circumferential thread on the edge provided with diametrally opposed semicircular groovings (16).

A nut ring (17) (figs. 5 and 8) is provided with diametrally opposed semicircular groovings (18) and is meant to be mounted on the flange (13), as shown in fig. 9, so to get the groovings (18) and (16) respectively to match forming holes as shown in fig. 10. At the same time, flange (13) carries a projecting part (19) (fig. 7) and nut ring (17) has a corresponding grooving (20) (fig. 8). When these two elements are coupled also projecting part (19) and grooving (20) couple together as shown in fig. 10 to prevent from reciprocal rotations between the two elements.

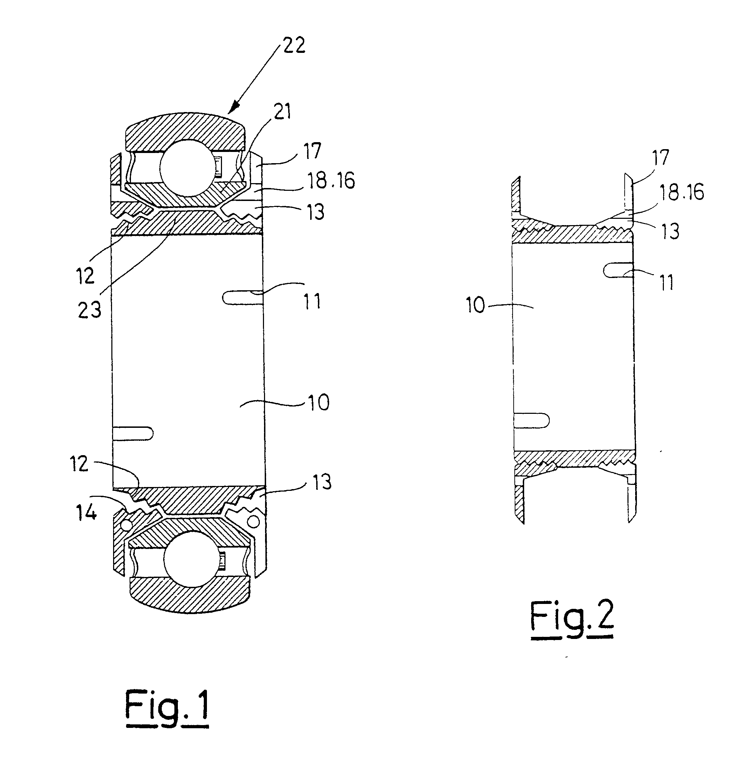

Bushing (10) is mounted on the shaft between this and the outer ring (21) of the bearing (22). The external surface (23) of cylinder (10) will be facing the internal surface of the inner race (21) of the bearing. The flanges (13) are screwed onto the two threaded end sections of bushing (10) (figs. 1 and 2). This operation is carried out by means of two compass keys which are inserted into holes 16 and 18 that are made between each flange (13) and the respective nut ring (17) as already described.

As we have already said, the threads (12) of the bushing (10) have a conical shape; consequently, the two lengthwise slots (11) strain with a plastic yielding caused by the tightening of the nut rings on the taper fits and lock the system onto the shaft on which it is mounted.

As schematically shown in fig. 1, a system is obtained wherein the ball bearing is contained between the two flanges (13) locked onto the shaft on which the bushing (10) itself is slipped and locked.

As it can be understood, such a system allows to eliminate the eccentricity problems of the bearing relatively to the shaft, as instead does happen actually.

Moreover, the problems connected with the traditional difference of thickness between the outer and the inner races are eliminated and this system avoids realizing a zinc-plating on the whole inner race because of the introduction of the bushing (10) that can also be galvanized.

It is also possible to mount protective screens on the nut rings (17) so as to avoid further working on the bearing.

The system finally allows the possible utilization of brass for nut rings and bushings, where the costs allow to, both to obtain a weight reduction and to facilite a successive extraction of the bearing. This would avoid, in case of seizing of the same, the possible deterioration of the shaft.

## Claims

1. A selflocking unit for ball bearings, characterized in that it comprises a bushing (10), interposed between the shaft and the inner race (21) of the bearing and equipped with a thread (12) along the sections of its outer surface, and equipped with flanges (13) threaded internally (14) so as to be screwed on the threads (12) of the bushing (10) and between them the inner race (21) of the bearing (10) is contained.

2. A unit according to claim 1 wherein the bushing (10) is provided with lengthwise slots (11) and strains with a plastic yielding on the shaft following the screwing of the flanges (13) on the bushing (10).

3. A unit according to claim 1 wherein nut rings (17) are mounted on the flanges (13); between the flanges (13) and the nut rings (17), holes (16 and 18) are obtained for receiving means to screw the unit formed by flange (13) and nut ring (17) on the bushing (10).

4. A unit according to claim 3 wherein each nut ring (17) and the relative flange (13) are respectively provided with a projecting part (19) and a grooving (20) that couple together to prevent the two elements from reciprocal rotations.

5. A unit according to claim 1 wherein the threads (12) of the bushing (10) have a conical shape converging towards the outside of the bushing (10).

Fig.1

Fig.2

Fig.6

Fig.3

Fig.10

Fig.9

Fig.7

Fig. 4

Fig.8

Fig.5

European
Patent Office

# EUROPEAN SEARCH REPORT

Application Number

## EP 90 12 1537

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-2 580 82   (BRAUMANDL) <br> * Whole document * <br> – – – | 1,2 | F 16 <br> C 35/073 |
| A | | 3 | |
| X | FR-A-5 685 64   (COLLET) <br> * Page 1; figures 1-3 * <br> – – – | 1,2 | |
| X | FR-A-1 020 908   (SPIETH) <br> * Figures 1,5,9,10 * <br> – – – | 1 | |
| A | | 2,3 | |
| A | US-A-1 669 725   (SCRIBNER) <br> * Page 1, figures * <br> – – – – – | 1-5 | |

TECHNICAL FIELDS
SEARCHED (Int. Cl.5)

F 16 C
F 16 D

The present search report has been drawn up for all claims

| Place of search | Date of completion of search | Examiner |
|---|---|---|
| The Hague | 15 March 91 | ORTHLIEB CH.E. |